# EUROPÄISCHE PATENTSCHRIFT

(11) **EP 0 769 421 B1**
(45) Veröffentlichungstag und Bekanntmachung des Hinweises auf die Patenterteilung: **08.03.2000**
(21) Anmeldenummer: 96117036.2
(22) Anmeldetag: 24.10.1996
(51) Int. Cl.: B60R 13/08, B62D 25/16, G10K 11/172

(54) **Vorrichtung zur Verminderung des Reifen/Fahrbahngeräusches**
Tyre/road noise reduction arrangement
Dispositif pour réduire le bruit pneus/route

(30) Priorität: 28.10.1995 DE 19540263
(43) Veröffentlichungstag der Anmeldung: 23.04.1997
(73) Patentinhaber: Continental Aktiengesellschaft, 30165 Hannover (DE)
(72) Erfinder: Folchert, Uwe, Dr., 30989 Gehrden (DE); Veit, Ivar, Dr., 64564 Nauheim (DE)

(56) Entgegenhaltungen:
- DE-A- 4 200 722
- DE-A- 4 240 935
- DE-C- 4 241 518
- GB-A- 2 265 875

## Beschreibung

Die Erfindung betrifft eine Vorrichtung zur Verminderung eines von einem fahrenden Kraftfahrzeug verursachten Reifen/Fahrbahngeräusches mit einem ein Fahrzeugrad auf einem Teilumfang umgebenden Radgehäuse.

Das Reifen/Fahrbahngeräusch eines fahrenden Kraftfahrzeuges stellt eine Lärmquelle dar. Die hauptsächliche Abstrahlung von Schalleistung erfolgt bei Pkw-Reifen in einem Frequenzbereich von ca. 500 bis 2000 Hz, bei Lkw-Reifen in einem Frequenzbereich von ca. 400 bis 1200 Hz.

Aus der DE-OS 30 20 849 ist es bekannt, mitrotierende Schallschirme an Autoreifen anzubringen. Die Wirkung des Schallschirmes hängt von der geometrischen Höhe des Schirmes ab. Je größer der dem Schallstrahl über die Schirmkante aufgezwungene Umweg ist, desto größer ist auch die Lärmreduktion. Bei einer Anordnung eines Schallschirmes ist es bekannt, an der Schirmkante Resonatoren anzubringen.

Das Anbringen von separaten Schallschirmen ist technisch aufwendig. Beim Befahren von Bordsteinen besteht außerdem eine Beschädigungsgefahr dieser Schallschirme. Die Schallschirme führen insgesamt zu einem breiteren Radstand. Außerdem stellen sie ungefederte Massen dar, die speziell ausgewuchtet werden müssen.

Aus der DE 42 41 518 C1 ist eine im Radgehäuse eines Kraftfahrzeuges befestigte Umkleidung bekannt, die als ein doppelwandiges und formstabiles Flächengebilde ausgestaltet ist und die ein System von Helmholtz-Resonatoren aufweist. Diese bekannte Vorrichtung wirkt als passiver Schallabsorber und umfaßt eine Außenhülle, die dem Rad zugewandt ist, und eine dem Radkasten zugewandte Rückwand. Die Wände des Flächengebildes bestehen aus zwei formstabilen und somit starren Folien.

Es hat sich in durchgeführten Schallfelduntersuchungen gezeigt, daß die Schallabsorption dieser Vorrichtung nicht ausreichend ist. Dieses wird darauf zurückgeführt, daß die Vorrichtung nicht im nahen Bereich der Schallquelle wirksam wird, weil aufgrund der erforderlichen Bodenfreiheit diese nicht tief über der Fahrbahn angebracht werden kann.

Auch aus der DE 44 13 009 A1 ist ein doppelbandiges Radgehäuse bekannt, daß zur Schallabsorption in Form eines flachen Resonanzkörpers mit einer, zahlreiche Löcher aufweisenden Vorderwand ausgebildet ist. Der so gebildete Schallabsorber ist als kombinierter Platten-/Lochresonator ausgebildet. Das Fahrzeugrad wird in seiner oberen Umfangshälfte von diesem Gehäuse umgeben. Die Enden des Radgehäuses sind über elastische Verbindungsmittel verschlossen, die Ablauföffnungen für Wasser aufweisen. Auch für diese Vorrichtung gilt, daß die Schallabsorption nicht ausreichend ist, weil die Vorrichtung nicht im nahen Bereich der Schallquelle wirksam wird.

Der Erfindung liegt die Aufgabe zugrunde, das von einem Kraftfahrzeug emittierte Reifen/Fahrbahngeräusch mit geringem technischen Aufwand wesentlich zu verringern.

Die Aufgabe wird durch die im Kennzeichen des Anspruchs 1 genannten Merkmale gelöst. Die flexible Schürze ist vor oder hinter dem Rad am Radhaus und gegebenenfalls an den seitlichen Bereichen des Radhauses angebracht. Die zur Fahrbahn gerichteten Öffnungen der lambda/4- oder Helmholtz-Resonatoren haben eine günstige schallabsorbierende Wirkung auf das Fahrbahn/Reifengeräusch. Die Schallabsorption erfolgt durch den bekannten Effekt der lambda/4- oder Helmholtz-Resonatoren. Die flexiblen Schürzen ermöglichen es, die schallabsorbierenden Bauteile hinreichend nahe an der Hauptschallquelle des Reifens, der Bodenaufstandsfläche, zu positionieren. Dadurch ist diese Schallabsorptionsvorrichtung äußerst günstig auf die realen Schallfelder in der Umgebung des Reifens abgestimmt.

In vorteilhafter Ausgestaltung der Erfindung besteht die Schürze aus einem doppelwandigen Grundkörper aus Gummi mit Zwischenstegen, durch die zahlreiche Resonatorkammern entsprechender Breite und Höhe entstehen. Dabei entspricht die Höhe der jeweiligen Resonatorkammer einer oder mehrerer besonders störender Erregerfrequenzen. Durch geeignete Wahl der Höhen läßt sich die schallabsorbierende Wirkung auf das jeweilige Fahrbahn/Reifengeräusch abstimmen. Durch eine Variation der Kammerhöhen über die Länge der Schürze läßt sich zudem ein breitbandiges Absorptionverhalten erzielen.

Die Schürze übernimmt in vorteilhafter Weise auch die Funktion eines Spritzschutzes.

Anhand der schematischen Zeichnung wird nachstehend ein Ausführungsbeispiel der Erfindung näher erläutert. Es zeigt
- Fig. 1: in schematischer Darstellung die Ausbildung eines ein Fahrzeugrad abdeckenden Radkastens mit an seinen beiden Enden angebrachten flexiblen Schürzen,
- Fig. 2: in schematischer Einzeldarstellung und in teilweiser aufgebrochener Darstellung ein Querteil einer flexiblen Schürze.

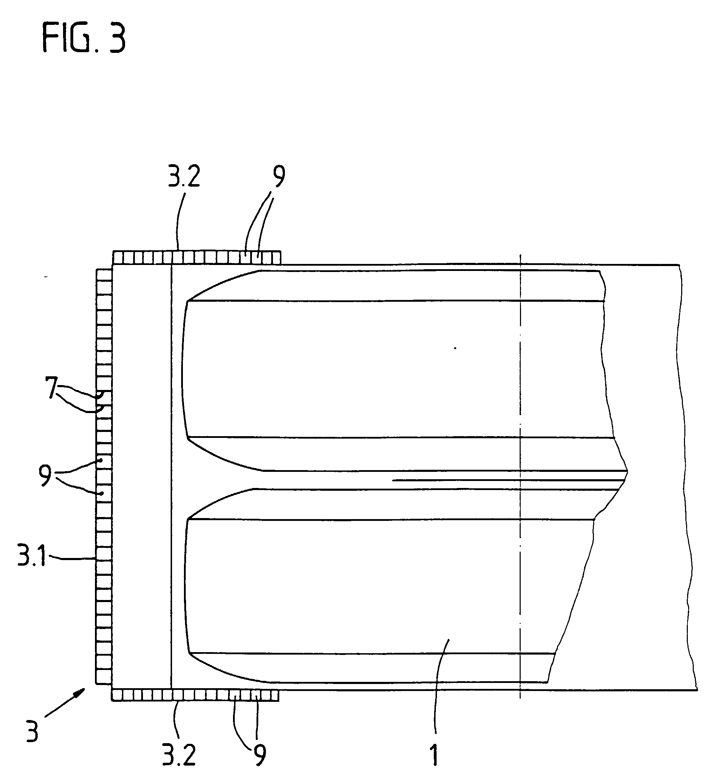

- Fig. 3: eine Draufsicht von unten auf die angebrachte flexible Schürze gemäß Pfeil III in Fig. 1.

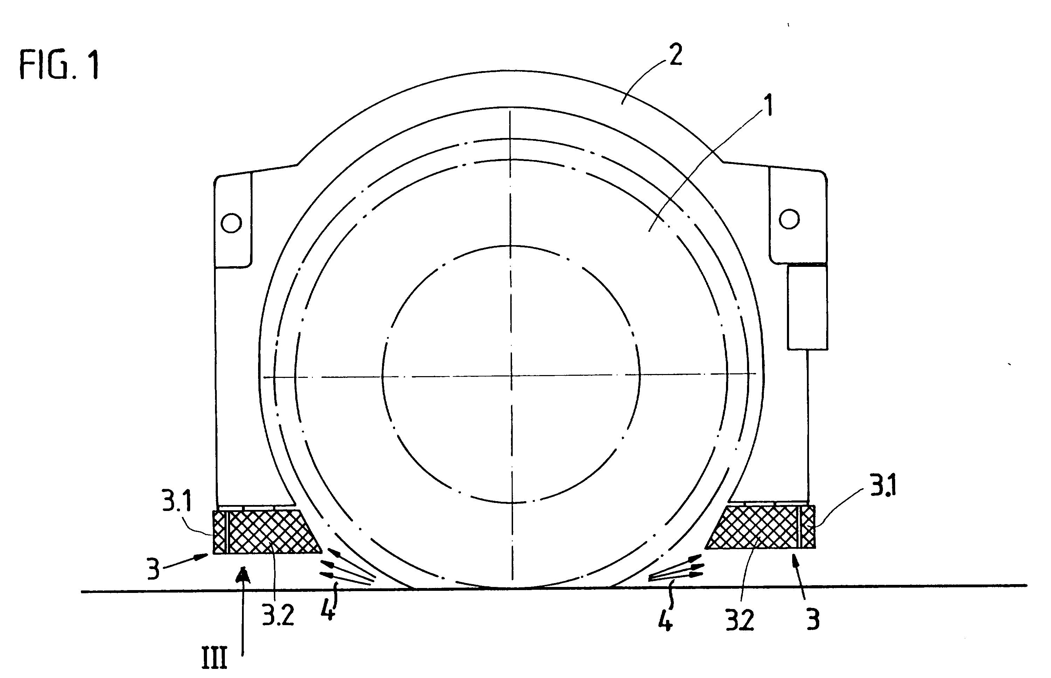

In Fig. 1 wird schematisch ein Rad 1, z.B. ein Zwillingsrad, eines Kraftfahrzeuges in Seitenansicht mit dem darüber bzw. darum angeordneten Radkasten 2 dargestellt. Die hauptsächlichen Abstrahlrichtungen des Reifen/Fahrbahngeräusches sind durch Pfeilbündel 4 angedeutet. An den zur Fahrbahnoberfläche gerichteten Enden des Radkastens 2 sind jeweils eine flexible Schürze 3 aus Gummi angebracht, die sich somit vor und hinter dem Rad 1 befinden.

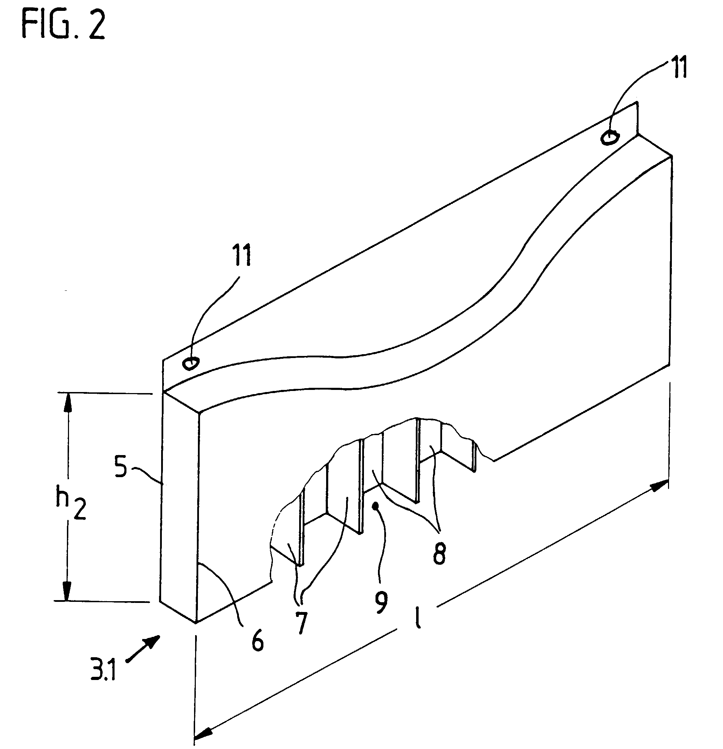

Die Gummischürzen 3 bestehen jeweils aus einem Querteil 3.1 und zwei Seitenteilen 3.2. Jedes Querteil 3.1 weist einen doppelwandigen Grundkörper 5, 6 auf, der mit Zwischenstegen 7 ausgestattet ist (Fig. 2). Durch die Zwischenstege 7 werden vertikal verlaufende Kammern 8 gebildet. Die Höhe h₂ der nebeneinanderliegenden Kammern 8 verläuft über die Länge 1 des flexiblen Querteils 3.1 unterschiedlich. Durch diese kurvenförmige Variation der Kammerhöhen h₂ über die Länge 1 des Querteils 3.1 läßt sich ein breitbandiges Schallabsorptionsverhalten erzielen. Die aus dem doppelwandigen Bereich hervorstehende Wand 5 weist zwei Befestigungsöffnungen 11 zum Aufhängen an die Enden des Radkastens 2 auf.

Zur Verringerung des im Bodenbereich des Rades 1 abgestrahlten Lärms sind die Kammern 8 einseitig zur Fahrbahnoberseite hin offen (Öffnungen 9).

Die Kammern 8 stellen lambda/4-Resonatoren dar und sind für den Einsatz bei Personenkraftwagen auf einen Frequenzbereich von 500 bis 2000 Hz und für den Einsatz bei Nutzfahrzeugen auf einen Frequenzbereich von 400 bis 1200 Hz abgestimmt.

## Patentansprüche

1. Vorrichtung zur Verminderung eines von einem fahrenden Kraftfahrzeugs verursachten Reifen/Fahrbahngeräuschs mit einem ein Fahrzeugrad auf einem Teilumfang umgebenden Radgehäuse,
**dadurch gekennzeichnet,**
daß an einem oder beiden zur Fahrbahnfläche weisenden Enden des Radgehäuses (2) eine flexible Schürze (3) aus elastischem, gummiartigem Werkstoff angebracht ist, die zum Straßenbelag hin offene Hohlräume aufweist, die in Form von lambda/4- oder Helmholtz-Resonatoren ausgebildet sind.

2. Vorrichtung nach Anspruch 1, dadurch gekennzeichnet, daß die Schürze (3) aus einem doppelwandigen Grundkörper (5, 6) mit vertikalen Zwischenstegen (7) besteht, durch die eine Mehrzahl von nebeneinander angeordneten Resonatorkammern (8) mit variierender Höhe (h) über die Länge der Schürze (3) entstehen.

3. Vorrichtung nach Anspruch 1 oder 2, dadurch gekennzeichnet, daß die flexible Schürze (3) aus einem quer zur Reifenlaufrichtung angeordneten Querteil (3.1) und zwei sich im Bereich der Enden des Querteils (3.1) anschließenden in Reifenlaufrichtung angeordneten Seitenteilen (3.2) besteht.

4. Vorrichtung nach Anspruch 3, dadurch gekennzeichnet, daß die dem Reifen zugewandte Höhenkante des Seitenteils (3.2) annäherend dem Reifenumfang folgend verläuft.

## Claims

1. Apparatus for reducing a tyre/roadway noise, which is caused by a travelling automative vehicle, using a wheel housing, which surrounds part of the circumference of a vehicle wheel, characterised in that a flexible apron (3), formed from resilient, rubber-like material, is mounted on one or both of the ends of the wheel housing (2) pointing towards the surface of the roadway, and said apron has cavities which are open towards the road covering and are in the form of lambda/4 or Helmholtz resonators.

2. Apparatus according to claim 1, characterised in that the apron (3) comprises a double-walled basic body (5, 6) having vertical intermediate webs (7), by means of which a plurality of resonator chambers (8) are formed, which are disposed adjacent one another and vary in height (h) over the length of the apron (3).

3. Apparatus according to claim 1 or 2, characterised in that the flexible apron (3) comprises a transverse portion (3.1), which is disposed transversely relative to the direction of travel of the tyre, and two lateral portions (3.2), which communicate with each other in the region of the ends of the transverse portion (3.1) and are disposed in the direction of travel of the tyre.

4. Apparatus according to claim 3, characterised in that the vertical edge of the lateral portion (3.2) facing the tyre extends in such a manner as to follow approximately the tyre circumference.

## Revendications

1. Dispositif destiné à réduire le bruit entre les pneus et la route occasionné par un véhicule roulant, comprenant une cage à roues enveloppant une partie de la périphérie d'une roue de véhicule, caractérisé en ce qu'un tablier (3) flexible, réalisé dans un matériau élastique gommeux, est monté sur une ou les deux extrémités de la cage à roues (2) orientées vers la surface de roulement, lequel tablier est muni de cavités dont l'ouverture est orientée vers le revêtement de la route, qui sont réalisées en forme de résonateurs quart d'onde ou de résonateurs Helmholtz.

2. Dispositif selon la revendication 1, caractérisé en ce que le tablier (3) est formé par un corps de base (5, 6) à double paroi muni d'ailettes (7) intermédiaires verticales, qui délimitent une pluralité de chambres de résonance (8), disposées les unes à côté des autres et dont la hauteur (h) varie sur toute la longueur du tablier (3).

3. Dispositif selon la revendication 1 ou 2, caractérisé en ce que le tablier flexible (3) est formé par une partie transversale (3.1), disposée transversalement au sens de roulement des pneus, et deux parties latérales (3.2) juxtaposées aux zones d'extrémités de la partie transversale (3.1) et disposées dans le sens de roulement des pneus.

4. Dispositif selon la revendication 3, caractérisé en ce que le bord vertical de la partie latérale (3.2), orienté vers le pneu, suit pratiquement le contour du pneu.
